**Europäisches Patentamt**

**European Patent Office**

**Office européen des brevets**

(19)

(11) Veröffentlichungsnummer : **0 041 717**
**B1**

(12) **EUROPÄISCHE PATENTSCHRIFT**

(45) Veröffentlichungstag der Patentschrift :
**09.01.85**

(21) Anmeldenummer : **81104378.5**

(22) Anmeldetag : **05.06.81**

(51) Int. Cl.⁴ : **C 02 F 1/52, B 01 D 23/10,**
**B 01 D 23/12, B 01 D 37/00,**
**B 01 D 39/04, A 22 B 5/12**

(54) **Vorrichtung zur Brühwasserreinigung.**

(30) Priorität : **09.06.80 DE 3021619**

(43) Veröffentlichungstag der Anmeldung :
**16.12.81 Patentblatt 81/50**

(45) Bekanntmachung des Hinweises auf die Patenterteilung : **09.01.85 Patentblatt 85/02**

(84) Benannte Vertragsstaaten :
**AT CH IT LI**

(56) Entgegenhaltungen :
**AT-B- 254 081**
**AT-B- 327 824**
**DE-B- 1 048 790**

(73) Patentinhaber : **Weiss, Alois**
**Im Letten**
**D-7081 Oberalfingen (DE)**

(72) Erfinder : **Weiss, Alois**
**Im Letten**
**D-7081 Oberalfingen (DE)**

(74) Vertreter : **Dipl.-Phys.Dr. Manitz Dipl.-Ing. Finsterwald**
**Dipl.-Ing. Grämkow Dipl.-Chem.Dr. Heyn**
**Dipl.-Phys.Rotermund**
**B.Sc. Morgan Robert-Koch-Strasse 1**
**D-8000 München 22 (DE)**

**Beschreibung**

Die Erfindung betrifft eine Vorrichtung zur Reinigung des Brühwassers in Anlagen zur Enthaarung von Schlachttieren, insbesondere von Schweinen, mit einer mit dem jeweiligen Brühwasserbehälter über Leitungen verbundenen Filterstation und mit einer das Brühwasser im geschlossenen Kreislauf zwischen Behälter und Filterstation umwälzenden Pumpe.

Eine derartige Vorrichtung ist aus der DE-B-1 048 790 bekannt. Bei dieser bekannten Vorrichtung sind im Brühwasserbehälter Düsen und Brausen angeordnet, mit denen heißes Wasser auf den den Behälter durchlaufenden Tierkörper aufgespritzt wird. Das ablaufende Wasser sammelt sich im unteren wannenartig ausgebildeten Behälter und wird nach Durchlaufen eines im Bodenbereich des Behälters vorgesehenen Grobfilters zur Rückhaltung der Borsten der enthaarten Tiere in eine Filterstation gepumpt, welche ein Feinfilter zur Ausfilterung von Schmutzteilchen umfaßt.

Aufgabe der Erfindung ist es, eine Vorrichtung zur Brühwasserreinigung zu schaffen, die wirtschaftlich betrieben werden kann, einfach bedienbar ist und mit der ein hoher Reinigungsgrad gewährleistet ist.

Gelöst wird diese Aufgabe gemäß der Erfindung dadurch, daß in der mit dem Brühwasserbehälter verbundenen Filterstation im Strömungsweg ein herausnehmbarer, korbartiger Einsatz vorgesehen ist, dessen Innenraum zur Aufnahme eines sich aufbauenden Borstenfilters dient.

Hierdurch wird ein die Brühwasserumwälzung wenig behinderndes, d. h. nicht zur Verstopfung tendierendes Filter mit relativ großem Filtervolumen bereitgestellt, das unter Beibehaltung der notwendigen Durchlässigkeit für die umlaufende Flüssigkeit eine effektive Ausfilterung von Schmutzteilchen ermöglicht. Bei ausreichender Beladung mit Schmutzteilchen kann das aus Borsten aufgebaute Filtermedium zusammen mit dem Einsatz aus dem Strömungsweg entnommen und als kompakter Abfallstoff ohne Unterbrechung des Brühwasserkreislaufes entfernt werden.

In vielen Fällen ist es von Vorteil, die Filterstation als separates, insbesondere fahrbares Abscheidegerät auszubilden und mit dem Brühwasserbehälter über Schlauchleitungen zu verbinden. Diese Variante eignet sich auch dazu, mit bereits bestehenden Brüh- und Enthaarungsmaschinen kombiniert zu werden, da der Ablauf derartiger bereits vorhandener Geräte als ein Verbindungsanschluß zu dem Abscheidegerät verwendet werden kann und es somit nur noch notwendig ist, einen zweiten Anschluß zu schaffen, was wiederum in der Praxis keine besonderen Schwierigkeiten bereitet, da ein derartiger Zusatzanschluß gegebenenfalls in eine bereits vorhandene Klappe oder dergleichen integriert werden kann.

Besonders wirksam ist eine Kombination eines Abscheidegeräts der beschriebenen Art mit einer Brüh- und Enthaarungsmaschine mit wenigstens einer rotierenden Enthaarungswalze. Die Enthaarungswalze verursacht nämlich im Brühwasser eine Wasserumwälzung, die im Falle des Anschlusses einer stirnseitig vorgesehenen Abzugsleitung eine in Richtung dieses Abzugs gerichtete Komponente erhält, so daß trotz eines nur stirnseitig vorgesehenen Abzugs-Anschlusses auf überraschend einfache Weise sichergestellt werden kann, daß Schmutzteilchen und insbesondere Borsten sehr schnell und vollständig aus beliebigen Bereichen des Brühwasserbehälters . zu dieser Abzugsleitung gelangen und damit auch dann im entsprechenden Filter abgeschieden bzw. zum Aufbau des Filters verwendet werden können. Durch die Wasserumwälzung im Brühbehälter wird auch vermieden, daß Borsten auf der Wasseroberfläche verbleiben und nicht zum Abzug gelangen. Die Umwälzpumpe sowie die Filterstation werden zweckmäßigerweise im Brühwasserbehälter integriert und insbesondere stirnseitig angeordnet. Die Umwälzpumpe wird dabei nach Art einer Kreiselpumpe mit vorzugsweise nur zwei Radialschaufeln ausgeführt, so daß sie auch ein mit Borsten und Klauen verschmutztes Wasser ohne Verstopfungsgefahr pumpen kann.

Der Wasserspiegel im Brühwasserbehälter liegt vorzugsweise höher als die Mündung der Zulaufleitung im Abscheidegerät. Auf diese Weise läuft das verschmutzte Brühwasser von alleine in das Abscheidegerät und gelangt damit in den korbartigen Siebeinsatz, der in einem Aufnahmebehälter des Abscheidegeräts gehaltert ist. Die Oberkante dieses Aufnahmebehälters liegt höher als des maximale Wasserpegel im Brühwasserbehälter, so daß jegliche Überlaufgefahr auch dann beseitigt ist, wenn der Siebeinsatz zur Auswechslung herausgenommen wird.

Der Siebeinsatz selbst kann beispielsweise allseitig aus einem relativ grobmaschigen Sieb bestehen, da die eigentliche Filterwirkung durch den sich aufbauenden Borstenfilter erbracht wird und der Siebkord lediglich sicherstellen muß, daß die Borsten in ausreichender Weise zurückgehalten werden.

Die Erfindung wird im folgenden anhand eines Ausführungsbeispiels unter Bezugnahme auf die Zeichnung näher erläutert; in der Zeichnung zeigt :

Figur 1 eine schematische Darstellung zur Erläuterung der Funktion eines gemäß der Erfindung ausgebildeten Abscheidegeräts in Zusammenarbeit mit einer Brüh- und Enthaarungsmaschine und

Figur 2 eine wiederum schematische, teilweise gebrochen dargestellte Ansicht einer vorteilhaften Ausführungsform eines nach der Erfindung ausgebildeten Abscheidegeräts.

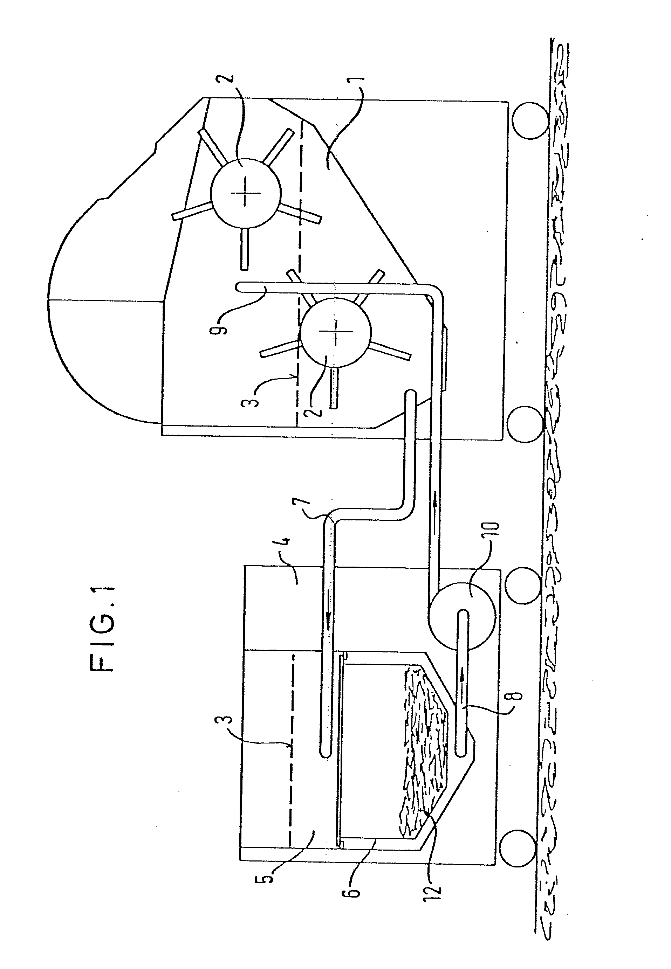

Nach Fig. 1 umfaßt eine bekannte Brüh- und Enthaarungsmaschine einen Brühwasserbehälter 1, durch den sich im dargestellten Falle zwei gegeneinander versetzt angeordnete Enthaarungswalzen 2 erstrecken, die stirnwandseitig gelagert und angetrieben sind. Eine der beiden Enthaarungswalzen 2 liegt zumindest im wesentlichen unterhalb des Brühwasserpegels 3, während die andere Walze darüber angeordnet ist.

Dieser Brüh- und Enthaarungsmaschine zugeordnet ist ein Abscheidegerät 4 mit einem in einem offenen Behälter 5 angeordneten Siebkorb 6 und einer Umwälzpumpe 10. Zwischen Abscheidegerät 4 und Brühwasserbehälter 1 sind Schlauchverbindungen, und zwar vorzugsweise über Schnellkupplungen vornehmbare Schlauchverbindungen vorgesehen, mittels der das Brühwasser in einem geschlossenen Kreislauf geführt werden kann.

Über die in Bodennähe am Brühwasserbehälter 1 angeschlossene Leitung 7 gelangt das verschmutzte Brühwasser in den Behälter 5 des Abscheidegeräts 4, wobei die Leitung 7 oberhalb des Siebkorbes 6 mündet. Diese Mündung liegt vorzugsweise tiefer als der Pegel 3 des Brühwassers im Brühwasserbehälter 1, do daß sich diese Strömung zwangsläufig einstellt.

Im bodenseitigen Bereich des im unteren Teil trichterförmig ausgebildeten Behälters 5 führt eine Leitung 8 zur Pumpe 10, mittels der das gefilterte Brühwasser wieder in den Brühwasserbehälter 1 zurückgefördert wird. Die entsprechende Verbindungsleitung 9 mündet oberhalb des Pegels 3 im Brühwasserbehälter.

Von wesentlicher Bedeutung ist, daß die vom verschmutzten Brühwasser mitgeführten Borsten im Siebkorb 6 ein wirrvliesartiges Filter 12 bilden, das sich im dargestellten Falle kontinuierlich aufbaut und sicherstellt, daß im wesentlichen ohne Behinderung der Wasserumwälzung alle Feststoff-Verschmutzungen innerhalb dieses Filtermaterials aufgenommen und festgehalten werden.

Hat das Borstenfilter eine bestimmte Höhe innerhalb des Siebkorbs 6 erreicht oder wird die Menge an abgeschiedenen Schmutzstoffen als ausreichende Filterbelastung betrachtet, so kann der in den Behälter 5 hängend eingesetzte Siebkorb 6 einfach herausgenommen und entleert werden. Nach erneutem Einsetzen des Siebkorbs baut sich sofort wiederum ein neuer Borstenfilter 12 auf, der die angestrebte Reinigungswirkung erbringt.

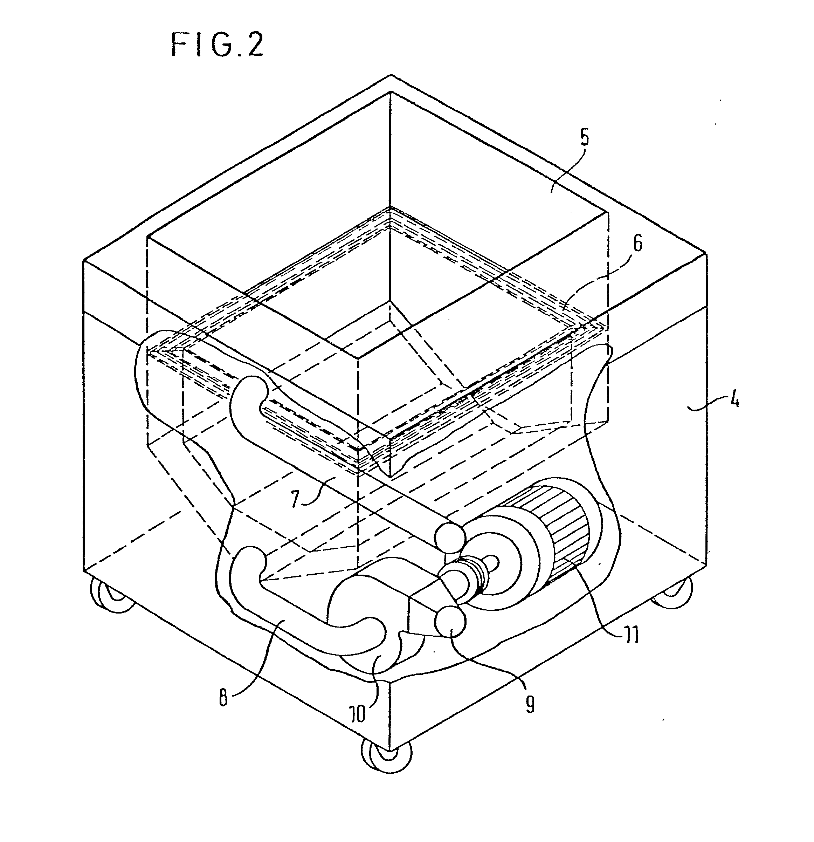

Fig. 2 zeigt das Abscheidegerät 4 in einer konkreten praktischen Realisierung. Dabei ist zu erkennen, daß der Aufnahmebehälter 5, der in diesem Fall in seinem oberen Bereich als im Querschnitt rechteckiger Behälter und in seinem unteren Bereich trichterförmig ausgebildet ist, den Siebkorb 6 aufnimmt, welcher mit deutlichem Abstand unterhalb der Oberkante des Behälters 5 gehaltert ist. Auf diese Weise ist sichergestellt, daß im Falle einer Abschaltung der Umwälzpumpe 11 kein Überfließen des Brühwassers auftritt, sondern sich lediglich ein gleicher Brühwasserstand im Brühwasserbehälter 1 und im Abscheidegerät 4 einstellt.

Das Abscheidegerät 4 wird vorzugsweise auf Rollen gelagert, so daß es im praktischen Einsatz jeweils an passender Stelle aufgestellt werden kann. Bezüglich dieser Aufstellung ist aufgrund des Vorhandenseins der flexiblen Anschlußleitungen auch eine weitgehende Freiheit erreichbar.

Wie der Fig. 2 auch entnehmbar ist, wird die zweckmäßigerweise als eine Art Kreiselpumpe ausgebildete Umwälzpumpe 10, die unmittelbar von einem Motor 11 angetrieben wird, in der Rücklaufleitung 8 angeordnet.

Das erläuterte Abscheidegerät zeichnet sich durch äußerst einfachen Aufbau, flexible Einsatzmöglichkeit und hohe Wirksamkeit aus, wobei stets von ganz wesentlicher Bedeutung ist, daß aufgrund der Verwendung eines aus Abfallmaterial, nämlich Borsten, aufgebautem Wirrvliesfilters nicht nur keine Zusatzkosten für Filtermaterialien entstehen, sondern die für diesen Verwendungszweck geradezu idealen Filtereigenschaften des großvolumigen Borstenfilters ausgenutzt werden können.

## Ansprüche

1. Vorrichtung zur Reinigung des Brühwassers in Anlagen zur Enthaarung von Schlachttieren, insbesondere von Schweinen, mit einer mit dem jeweiligen Brühwasserbehälter über Leitungen verbundenen Filterstation und mit einer das Brühwasser im geschlossenen Kreislauf zwischen Behälter und Filterstation umwälzenden Pumpe, dadurch gekennzeichnet, daß in der mit dem Brühwasserbehälter (1) verbundenen Filterstation (4) im Strömungsweg ein herausnehmbarer, korbartiger Einsatz (6) vorgesehen ist, dessen Innenraum zur Aufnahme eines sich aufbauenden Borstenfilters (12) dient.

2. Vorrichtung nach Anspruch 1, dadurch gekennzeichnet, daß die Filterstation (4) als separates, insbesondere fahrbares Abscheidegerät ausgebildet und mit dem Brühwasserbehälter (1) über Schlauchleitungen verbindbar ist.

3. Vorrichtung nach Anspruch 1 oder 2, dadurch gekennzeichnet, daß im Brühwasserbehälter (1) wenigstens eine rotierende Enthaarungswalze (2) angeordnet ist, und daß die Leitungsanschlüsse am Brühwasserbehälter stirn- oder bodenseitig gelegen sind.

4. Vorrichtung nach Anspruch 2, dadurch gekennzeichnet, daß Umwälzpumpe (10) und Filterstation (4) in den Brühwasserbehälter (1) integriert sind.

5. Vorrichtung nach Anspruch 4, dadurch gekennzeichnet, daß die von der Filterstation (4) kommende Rücklaufleitung (9) oberhalb des Wasserspiegels (3) des Brühwasserbehälters (1) mündet.

6. Vorrichtung nach einem oder mehreren der vorhergehenden Ansprüche, dadurch gekennzeichnet, daß der aus Lochblech bestehende, korbartige Siebeinsatz (6) in einem Aufnahmebehälter (5) gehalten und auch während des Betriebs auswechselbar ist.

## Claims

1. Apparatus for the cleaning of the scalding water for the removal of hair from slaughter animals, in particular from pigs, the apparatus comprising a filter station connected with the respective container for the scalding water *via* conduits and a pump which circulates the scalding water in a closed circuit between the container and the filter station, characterized in that a removable basket-like insert (6) is provided in the flow path in the filter station (4) which is connected to the scalding water container (1), with the internal chamber of the insert serving to receive a self developing bristle filter (12).

2. Apparatus in accordance with claim 1, characterized in that the filter station (4) is constructed as a separate, and in particular movable filter device and is connected with the container (1) for the scalding water via hose conduits.

3. Apparatus in accordance with claim 1 or claim 2, characterized in that at least one rotating hair removal roller (2) is arranged in the container (1) for the scalding water ; and in that the conduit connections are arranged at the end face or base of the container for scalding water.

4. Apparatus in accordance with claim 2, characterized in that the circulating pump (10) and the filter station (4) are integrated into the container (1) for the scalding water.

5. Apparatus in accordance with claim 4, characterized in that the return flow conduit (9) coming from the filter station (4) opens above the water level (3) of the container (1) for the scalding water.

6. Apparatus in accordance with one or more of the preceding claims, characterized in that the basket-like sieve insert (6) consisting of perforate metal is held in a receiving container (5) and is also interchangeable during operation.

## Revendications

1. Dispositif pour l'épuration de l'eau d'échaudage dans des installations de dépilation de bêtes d'abattage, en particulier de porcs, avec une station de filtre reliée par des conduites au réservoir d'eau d'échaudage concerné, et avec une pompe mettant en circulation l'eau d'échaudage en circuit fermé entre le réservoir et la station de filtre, caractérisé en ce que dans la station de filtre (4) reliée au réservoir d'eau d'échaudage (1), une garniture en forme de panier amovible (6) est prévue dans le parcours d'écoulement, son volume interne servant à recevoir un filtre à soies (12) s'y montant.

2. Dispositif suivant la revendication 1, caractérisé en ce que la station de filtre (4) est réalisée en tant qu'appareil de séparation distinct, en particulier mobile, et peut être reliée par des conduites souples au réservoir d'eau d'échaudage (1).

3. Dispositif suivant la revendication 1 ou 2, caractérisé en ce que dans le réservoir d'eau d'échaudage (1) est disposé au moins un cylindre de dépilage rotatif (2), et en ce que les raccords de conduites sur le réservoir d'eau d'échaudage sont situés sur le côté frontal ou le fond.

4. Dispositif suivant la revendication 2, caractérisé en ce que la pompe de circulation (10) et la station de filtre (4) sont intégrées dans le réservoir d'eau d'échaudage (1).

5. Dispositif suivant la revendication 4, caractérisé en ce que la conduite de retour (9) venant de la station de filtre (4') débouche au-dessus du niveau de l'eau (3) du réservoir d'eau d'échaudage (1).

6. Dispositif suivant une ou plusieurs des revendications précédentes, caractérisé en ce que la garniture de tamis (6) en forme de panier, constituée par une tôle perforée, est supportée dans un réceptacle (5) et peut être remplacée même pendant l'exploitation.

FIG.1

FIG.2